Europäisches Patentamt

European Patent Office

Office européen des brevets

(11) Numéro de publication: **0 534 534 A1**

# DEMANDE DE BREVET EUROPEEN

(21) Numéro de dépôt: **92202838.6**

(51) Int. Cl.⁵: **H04N 7/00**

(22) Date de dépôt: **16.09.92**

(30) Priorité: **25.09.91 FR 9111826**

(43) Date de publication de la demande:
**31.03.93 Bulletin 93/13**

(84) Etats contractants désignés:
**DE FR GB**

(71) Demandeur: **LABORATOIRES
D'ELECTRONIOUE PHILIPS
22, Avenue Descartes
F-94450 Limeil-Brévannes(FR)**
(84) **FR**

(71) Demandeur: **N.V. Philips'**

**Gloeilampenfabrieken
Groenewoudseweg 1
NL-5621 BA Eindhoven(NL)**
(84) **DE GB**

(72) Inventeur: **Law, Steven, Société Civile S.P.I.D.
156, Boulevard Haussmann
F-75008 Paris(FR)**

(74) Mandataire: **Landousy, Christian
Société Civile S.P.I.D. 156, Boulevard
Haussmann
F-75008 Paris (FR)**

(54) **Dispositif de décodage de signaux dits compatibles après transmission de signaux à haute définition.**

(57) Dispositif de décodage de signaux dits compatibles après transmission et/ou stockage de signaux à haute définition préalablement transmis selon le standard HDMA. Ce dispositif comprend :

(1) un premier circuit (10) de sélection entre ses deux entrées A et B, ladite entrée A recevant parmi lesdits signaux transmis ceux qui correspondent à des blocs d'image 80 millisecondes ;

(2) en sortie de ce circuit et en série, deux mémoires de trame (11, 12), la première étant en sortie de la seconde et la seconde en sortie dudit circuit ;

(3) en sortie de la première mémoire de trame (11), un deuxième circuit (13) de sélection entre ses deux entrées C et D, l'entrée C recevant ladite sortie de la première mémoire de trame et l'entrée D recevant les mêmes signaux que l'entrée A du premier circuit de sélection, et la sortie S de ce deuxième circuit de sélection formant d'une part la sortie du dispositif de prétraitement et étant d'autre part renvoyée, par l'intermédiaire d'une connexion de retour (14), vers l'entrée B du premier circuit de sélection.

FIG. 2

EP 0 534 534 A1

EP 0 534 534 A1

La présente invention concerne un dispositif de décodage de signaux dits compatibles après transmission et/ou stockage de signaux à haute définition préalablement transmis selon le standard HDMAC.

En matière de distribution de programmes de télévision à haute définition, l'approche des laboratoires industriels européens repose sur le principe de la compatibilité par rapport au standard de diffusion par satellite D2-MAC/paquet. Sur le plan technique, cela signifie que les récepteurs D2-MAC/paquet de première génération pourront, au moment de l'introduction de la télévision à haute définition en Europe, quand même interpréter une partie des signaux à haute définition, dits signaux HDMAC, comme répondant à ladite norme D2-MAC/paquet. Sur le plan commercial, il existera donc, dès le début de la diffusion de programmes de télévision à haute définition, un public important, permettant à la vente de récepteurs d'évoluer progressivement vers la haute définition sans bouleversement du marché.

Ainsi, les émissions de télévision à haute définition pourront être reçues par deux types de récepteurs différents, d'une part le récepteur classique, permettant au téléspectateur de voir une image normale, dite compatible, de qualité habituelle (c'est-à-dire de qualité semblable à celle des images selon les normes telles que PAL, SECAM, etc...), et d'autre part un récepteur de type nouveau, incluant un décodeur HDMAC. Un tel décodeur, nécessairement coûteux en raison de la complexité des circuits électroniques conduisant à la reconstruction de l'image à haute définition HDMAC, risque cependant de détourner une partie notable du public de la télévision à haute définition, et l'intérêt est apparu de proposer un décodeur intermédiaire offrant une qualité d'image restituée qui, sans atteindre celle d'une image à haute définition, serait meilleure que celle de l'image compatible.

On rappellera, préalablement, les caractéristiques essentielles du système européen HDMAC de télévision à haute définition permettant la transmission de signaux à haute définition (dits signaux HDTV) de large bande à travers un canal de bande ici quatre fois plus petite. Les signaux HDTV (1250 lignes, 50 Hz, et à trames entrelacées, ce qui est conventionnellement noté 2 : 1) sont codés d'une part en un signal vidéo et d'autre part en un signal additionnel dit de contrôle ou d'assistance numérique (appelé signal DATV) et transmis pendant l'intervalle de retour trame. Le signal vidéo, qui contient les signaux de luminance et de chrominance après réduction de leur largeur de bande, est transmis selon les spécifications MAC/paquet, ce qui permet aux récepteurs de définition normale de visualiser un signal de type MAC avec seulement de légères dégradations par rapport à une transmission MAC conventionnelle. Le signal additionnel d'assistance numérique (DATV) est spécifiquement conçu pour les récepteurs HDMAC et transporte toutes les informations requises pour la reconstruction du signal HDTV à partir du signal vidéo émis, à largeur de bande réduite. Ce signal d'assistance numérique, pour lequel le débit numérique maximum alloué est d'environ 1 Mbit/s, permet d'asservir le récepteur HDMAC au codeur, de sorte qu'un traitement vidéo fiable et adaptatif au mouvement puisse être effectué dans le décodeur.

Les images HDTV présentent une résolution double de celle des images de télévision normale dans chacune des directions horizontale et verticale. Un facteur de compression de quatre doit donc être appliqué afin d'adapter le signal HDTV aux canaux de la norme MAC qui ne peuvent transmettre que des images de définition normale. Ceci est obtenu par un sous-échantillonnage spatio-temporel s'adaptant au contenu de l'image. Les images HDTV sont tout d'abord, à cet effet, segmentées régulièrement en 6480 blocs composés de 16 lignes par 16 points d'images (pixels). Le système distingue alors trois types de blocs en fonction de la vitesse de déplacement du contenu de ces blocs, et leur applique ensuite un traitement approprié, dans trois branches de traitement correspondant respectivement à la transmission d'une image complète en 80, 40, ou 20 millisecondes. Ces trois modes de codage de la luminance sont caractérisés par trois résolutions spatiales distinctes et par les procédés de sous-échantillonnage correspondants, décrits ci-dessous après avoir rappelé préalablement la composition d'une image HDTV d'origine :

$$a_1 \ a_2 \ a_3 \ a_4 \ a_5 \ a_6 \ a_7 \ \ldots\ldots$$

$$b_1 \ b_2 \ b_3 \ b_4 \ b_5 \ b_6 \ b_7 \ \ldots\ldots$$

$$c_1 \ c_2 \ c_3 \ c_4 \ c_5 \ c_6 \ c_7$$

$$d_1 \ d_2 \ d_3 \ d_4 \ d_5 \ d_6 \ d_7$$

$$e_1 \ e_2 \ . \quad . \quad . \quad . \quad .$$

$$f_1 \ f_2 \ . \quad . \quad . \quad . \quad .$$

$$etc\ldots\ldots\ldots$$

2

chaque échantillon de l'image, avec la notation ci-dessus, étant indiqué par une lettre qui désigne la ligne sur laquelle il se trouve et qui est affectée d'un indice correspondant à la colonne dans laquelle cet échantillon se trouve.

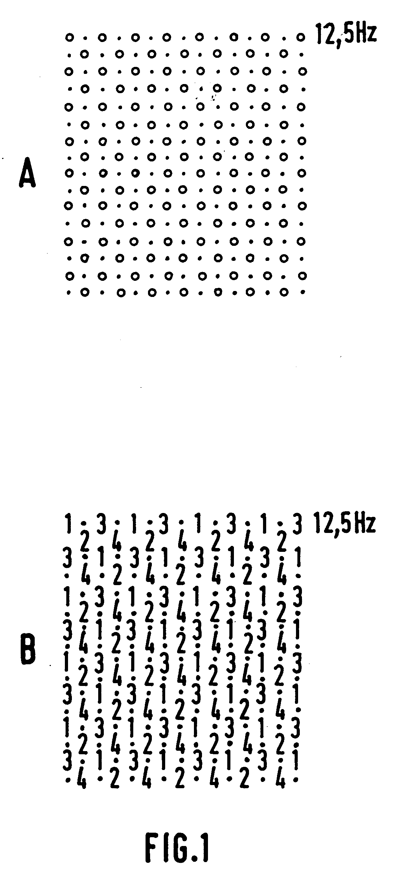

Le premier mode, dit mode statique (80 ms), utilise, pour obtenir le facteur de compression de quatre, une structure de sous-échantillonnage en quinconce à la fois dans l'image et dans chacune des quatre trames transmises toutes les 20 ms. Ce type de sous-échantillonnage conduit donc à l'élimination des échantillons pairs $a_2$, $a_4$, $a_6$, $a_8$,...., $c_2$, $c_4$, $c_6$, $c_8$,...., $e_2$, $e_4$, $e_6$, $e_8$,...., etc..., des lignes impaires et à l'élimination des échantillons impairs $b_1$, $b_3$, $b_5$, $b_7$,...., $d_1$, $d_3$, $d_5$, $d_7$,...., $f_1$, $f_3$, $f_5$, $f_7$,...., etc..., des lignes paires. Ce mode, qui donne la résolution spatiale la plus élevée et auquel correspond une fréquence de transmission de 12,5 hertz, est sélectionné lorsque le mouvement des objets dans le bloc considéré se produit à une vitesse qui, dans l'exemple ici décrit, ne dépasse pas celle correspondant à une largeur d'image parcourue en une minute (mouvement inférieur à 0,5 pixel en 20 ms). La figure 1A montre, d'une manière générale, dans un bloc d'image HDTV de 16 x 16 points d'image, la position des échantillons à transmettre (ces positions sont représentées par des cercles, les points indiquant les échantillons manquants du bloc d'image à haute définition représenté), et la figure 1B montre de façon spécifique, pour ce même bloc, les échantillons respectivement transmis par chacune des quatre trames (les chiffres 1 à 4 se réfèrent au rang de ces trames).

Le deuxième mode, dit mode de poursuite (40 ms), utilise, lui, également une structure de sous-échantillonnage en quinconce, mais seulement dans les trames impaires qui sont transmises toutes les 40 ms, ce qui maintient une résolution horizontale maximale et divise par deux la résolution verticale maximale précédente (le nombre de lignes étant divisé par deux). Les autres trames - ici les trames paires - non transmises sont ultérieurement reconstituées par recombinaison des deux trames impaires successivement transmises qui entourent chacune d'elles, à l'aide d'une interpolation compensée en mouvement. Ce mode est sélectionné lorsque le mouvement dans le bloc se produit, dans l'exemple décrit, à des vitesses comprises entre une largeur d'image parcourue en une minute et une largeur d'image parcourue en cinq secondes (mouvement compris entre 0,5 et 6 pixels en 20 ms).

Le troisième mode, dit mode dynamique (20 ms), correspond, dans ce même exemple, aux situations où le mouvement des objets devient rapide et se produit à des vitesses supérieures à une largeur d'image parcourue en cinq secondes (mouvement supérieur à 6 pixels en 20 ms). Le sous-échantillonnage d'un facteur 2 est à la fois horizontal et vertical, et la résolution est donc divisée par deux dans ces deux directions, mais le rendu des mouvements reste excellent grâce à la cadence des trames de 50 hertz.

Après un tel sous-échantillonnage, le signal HDTV à 1250 lignes avec une période de ligne de 32 microsecondes doit être converti en un signal à définition normale, dit compatible, à 625 lignes, avec une période de ligne de 64 microsecondes. Cette conversion est réalisée, dans les modes de codage de luminance 80 ms et 20 ms, à l'aide d'une technique dite de brassage de lignes qui prévoit d'entremêler les échantillons HDTV de deux lignes consécutives d'une même trame.

En particulier, pour le mode 80 ms, en utilisant ce brassage de lignes, les premiers échantillons transmis sont, pour quatre trames consécutives, les suivants :

a)

trame 1 :     $a_1$ $c_3$ $a_5$ $c_7$ ....

$e_1$ $g_3$ $e_5$ $g_7$ ....

$i_1$ $k_3$ $i_5$ $k_7$ .... etc...,

les lettres a, c, e, g, etc... et les indices qui affectent ces lettres désignant respectivement, dans le bloc HDTV d'origine, les rangs des lignes avant brassage et les rangs des colonnes avant brassage (la première trame transmise dans le mode 80 ms est donc obtenue, ligne par ligne, une fois ledit sous-échantillonnage en quinconce effectué, par brassage des échantillons impairs $a_1$, $a_5$, $a_9$, ... de la ligne 1 avec les échantillons pairs $c_3$, $c_7$, $c_{11}$, ... de la ligne 3, des échantillons impairs $e_1$, $e_5$, $e_9$, ...de la ligne 5 avec les échantillons pairs $g_3$, $g_7$, $g_{11}$, ... de la ligne 7, etc...) ;

b)

trame 2 :     $b_2$ $d_4$ $b_6$ $d_8$ ....

$f_2$ $h_4$ $f_6$ $h_8$ ....

$j_2$ $l_4$ $j_6$ $l_8$ .... etc...,

la deuxième trame transmise étant donc obtenue par brassage des échantillons impairs $b_2$, $b_6$, $b_{10}$, ... de la ligne 2 avec les échantillons pairs $d_4$, $d_8$, $d_{12}$, ... de la ligne 4, des échantillons impairs $f_2$, $f_6$, $f_{10}$, ... de la ligne 6 avec les échantillons pairs $h_4$, $h_8$, $h_{12}$, ...de la ligne 8, etc... ;

c)

trame 3 :     $c_1$ $a_3$ $c_5$ $a_7$ ....

$g_1$ $e_3$ $g_5$ $e_7$ ....

$k_1$ $i_3$ $k_5$ $i_7$ .... etc...,

la troisième trame transmise étant obtenue par brassage des échantillons pairs $a_3$, $a_7$, $a_{11}$, ... de la ligne 1 avec les échantillons impairs $c_1$, $c_5$, $c_9$, ... de la ligne 3, des échantillons pairs $e_3$, $e_7$, $e_{11}$, ... de la ligne 5 avec les échantillons impairs $g_1$, $g_5$, $g_9$, ... de la ligne 7, etc...;

d)

trame 4 :     $d_2$ $b_4$ $d_6$ $b_8$ ....

$h_2$ $f_4$ $h_6$ $f_8$ ....

$l_2$ $j_4$ $l_6$ $j_8$ .... etc...,

la quatrième trame transmise étant obtenue de même par brassage des échantillons pairs $b_4$, $b_8$, $b_{12}$, ... de la ligne 2 avec les échantillons impairs $d_2$, $d_6$, $d_{10}$, ... de la ligne 4, des échantillons pairs $f_4$, $f_8$, $f_{12}$, ... de la ligne 6 avec les échantillons impairs $h_2$, $h_6$, $h_{10}$, ...de la ligne 8, etc.

On a cependant observé que ce brassage des points des trames ainsi transmises dans le cas du mode 80 ms pouvait conduire, sur l'image, à un défaut que l'on a appelé "grouillement" et qui se matérialise par l'apparition, en surépaisseur des contours concernés, de petites dents de scie consécutives mobiles le long de ces contours ou, en l'absence de contours, par l'apparition d'un bruit s'apparentant à une texture artificielle.

Le but de l'invention est de proposer un dispositif de décodage permettant d'éliminer ce défaut.

A cet effet l'invention concerne un dispositif de décodage caractérisé en ce qu'il comprend :

(1) un premier circuit de sélection entre ses deux entrées A et B, ladite entrée A recevant parmi lesdits signaux transmis ceux qui correspondent à des blocs d'image 80 millisecondes ;

(2) en sortie de ce circuit et en série, deux mémoires de trame, la première étant en sortie de la seconde et la seconde en sortie dudit circuit ;

(3) en sortie de la première mémoire de trame, un deuxième circuit de sélection entre ses deux entrées C et D, l'entrée C recevant ladite sortie de la première mémoire de trame et l'entrée D recevant les mêmes signaux que l'entrée A, et la sortie S de ce deuxième circuit de sélection formant d'une part la sortie du dispositif de prétraitement et étant d'autre part renvoyée, par l'intermédiaire d'une connexion de retour, vers l'entrée B du premier circuit de sélection.

Tout en restant relativement simple en terme de circuits et donc peu coûteuse, cette solution permet d'améliorer considérablement la qualité d'ensemble de l'image compatible, en modifiant seulement la structure des blocs 80 ms. Cette amélioration a été vérifiée sur un nombre important d'images-tests : globalement, les zones d'image correspondant à des blocs 80 ms apparaissent nettement moins bruitées. Le traitement qui vient d'être proposé et qui s'adresse à des blocs correspondant à des zones stationnaires ou à des zones dans lesquelles les mouvements sont très lents a réellement éliminé l'effet de "grouillement" cité plus haut.

Les particularités et avantages de l'invention apparaîtront maintenant de façon plus détaillée dans la description qui suit et en référence aux dessins annexés, donnés à titre d'exemples non limitatifs et dans lesquels :

- la figure 1A montre, pour un bloc HDTV de 16 x 16 points d'image, la position des échantillons à transmettre dans le cas du mode statique 80 ms, et la figure 1B montre, pour ce même bloc, les échantillons effectivement transmis par trame sur une période de 80 ms ;

- la figure 2 montre un exemple de réalisation du dispositif de décodage selon l'invention.

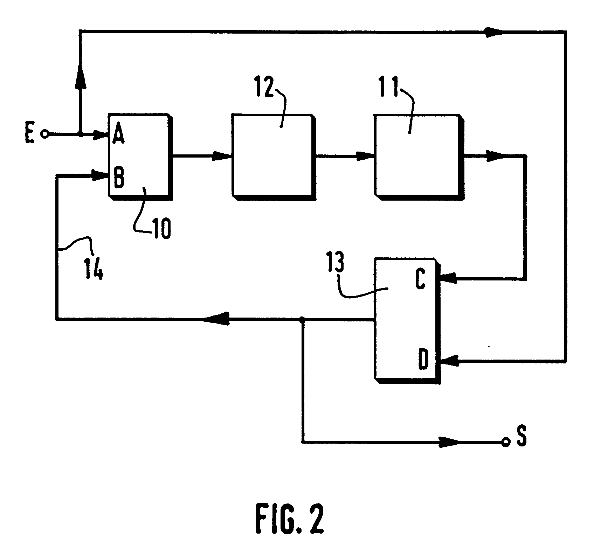

Ce dispositif selon l'invention, représenté sur la figure 2, comprend tout d'abord un premier circuit de sélection 10, recevant sur son entrée E des trames vidéo successives à décoder et en sortie duquel sont prévues, en série, deux mémoires de trame 11 et 12, du type FIFO ("First In, First Out"). Ces deux mémoires sont destinées à recevoir deux trames vidéo d'entrée successives lorsque le circuit de sélection 10 est en position A. Ce circuit 10 passe au contraire en position B quand les troisième et quatrième trames arrivent, et ne reprend la position A que pour recevoir les cinquième et sixième trames, et ainsi de suite de façon cyclique toutes les deux trames.

Le dispositif de décodage comprend également, pour reconstituer (sur une sortie S) des trames de sortie, un deuxième circuit de sélection 13 qui reçoit sur une entrée C la sortie de la première mémoire de trame 11 et sur une entrée D la connexion d'entrée du dispositif de décodage. Ce circuit de sélection 13 alterne, d'un échantillon de trame à l'autre, entre la position C, qui permet le prélèvement d'échantillons de la première (respectivement cinquième, neuvième,... etc...) trame, et la position D, qui permet le prélèvement d'échantillons de la troisième (respectivement septième, onzième,... etc..) trame disponible en entrée du dispositif au même moment.

Compte tenu des structures des trames 1 et 3 rappelées plus haut, la première trame vidéo de sortie, disponible en sortie du circuit 13, est donc constituée de la façon suivante (en l'appelant $S_1$) :

TRAME $S_1$ :     $a_1$ $a_3$ $a_5$ $a_7$ ..........

$e_1\ e_3\ e_5\ e_7$ ...........

$i_1\ i_3\ i_5\ i_7$ ...........

.....etc.....

Après écoulement d'une période de trame, le même fonctionnement, appliqué de façon rigoureusement identique à la deuxième trame d'entrée, qui a pris en mémoire 11 la place de la première trame d'entrée après traversée de la mémoire 12, et à la quatrième trame d'entrée, qui a succédé à la troisième trame d'entrée à l'entrée A du circuit de sélection 10, conduit à disposer en sortie S du circuit 13 d'une deuxième trame vidéo de sortie constituée de la façon suivante (en l'appelant $S_2$) :

TRAME $S_2$ :    $b_2\ b_4\ b_6\ b_8$ ...........

$f_2\ f_4\ f_6\ f_8$ ...........

$j_2\ j_4\ j_6\ j_8$ ...........

......etc....

Le dispositif de décodage comprend enfin une connexion de retour 14 grâce à laquelle chaque trame vidéo de sortie (trame $S_1$, trame $S_2$, etc....) est successivement présentée à l'entrée B du premier circuit de sélection 10. Grâce à cette connexion 14, au moment où la trame $S_1$ est juste reconstituée en sortie du deuxième circuit de sélection 13 (et où la troisième trame vidéo d'entrée arrive sur l'entrée A du circuit 10), ce premier circuit 10, après être resté en position A pendant deux périodes de trame, bascule en position B et la trame $S_1$ de sortie est stockée dans la deuxième mémoire 12 (où elle remplace la deuxième trame vidéo d'entrée qui est au même moment transférée dans la première mémoire 11). C'est dans cet état instantané des mémoires que le deuxième circuit de sélection 13 reconstitue la trame $S_2$ à partir des deuxième et quatrième trames vidéo d'entrée (présentes respectivement dans la mémoire 11 et sur l'entrée A).

Cette deuxième trame vidéo de sortie $S_2$ est à son tour présentée à l'entrée B du circuit 10 et stockée dans la deuxième mémoire 12, où elle remplace la première trame de sortie $S_1$ qui est au même moment transférée dans la mémoire 11. A ce moment, les première et deuxième trames vidéo de sortie $S_1$ et $S_2$ du deuxième circuit de sélection 13 ont donc pris la place, dans les mémoires 11 et 12 respectivement, des première et deuxième trames vidéo d'entrée. C'est à ce même moment, et dans ce nouvel état des mémoires 11 et 12, que d'une part le premier circuit 10 rebascule en position A après être resté en position B pendant deux périodes de trame, tandis que d'autre part le deuxième circuit 13 s'immobilise pendant deux périodes de trame en position C. Cette immobilisation sur C permet de disposer une deuxième fois en S, sur la sortie du circuit 13, des trames $S_1$ et $S_2$, tandis qu'arrivent à l'entrée A du circuit 10 les trames $E_5$ et $E_6$ qui viennent remplacer (le circuit 10 étant revenu en position A), dans les mémoires 11 et 12, les trames $S_1$ et $S_2$ respectivement.

L'ensemble du fonctionnement cyclique qui vient d'être décrit peut être mis encore plus en évidence en indiquant dans un tableau les informations présentes en quelques points essentiels du dispositif, à savoir le rang $R_e$ des trames d'entrée, les entrées A et B du premier circuit de sélection 10, les sorties des mémoires 12 et 11, les entrées C et D du deuxième circuit de sélection 13, et la sortie S de ce circuit 13, ainsi que le rang $R_s$ des trames de sortie présentes sur cette sortie S :

| $R_e$ | 1 | 2 | 3 | 4 | 5 | 6 | 7 | 8 | 9 | 10 |
|---|---|---|---|---|---|---|---|---|---|---|
| A | $E_1$ | $E_2$ | $E_3$ | $E_4$ | $E_5$ | $E_6$ | $E_7$ | $E_8$ | $E_9$ | $E_{10}$ |
| B | | | $S_1$ | $S_2$ | | | $S_5$ | $S_6$ | | |
| 12 | | $E_1$ | $E_2$ | $S_1$ | $S_2$ | $E_5$ | $E_6$ | $S_5$ | $S_6$ | $E_9$ |
| 11 | | | $E_1$ | $E_2$ | $S_1$ | $S_2$ | $E_5$ | $E_6$ | $S_5$ | $S_6$ |
| C | | | $E_1$ | $E_2$ | $S_1$ | $S_2$ | $E_5$ | $E_6$ | $S_5$ | $S_6$ |
| D | $E_1$ | $E_2$ | $E_3$ | $E_4$ | $E_5$ | $E_6$ | $E_7$ | $E_8$ | $E_9$ | $E_{10}$ |
| S | | | $S_1$ | $S_2$ | $S_1$ | $S_2$ | $S_5$ | $S_6$ | $S_5$ | $S_6$ |
| $R_s$ | | | 1 | 2 | 3 | 4 | 5 | 6 | 7 | 8 |

...et ainsi de suite en prolongeant vers la droite les lignes de ce tableau au fur et à mesure de la succession des trames d'entrée.

**Revendications**

1. Dispositif de décodage de signaux dits compatibles après transmission et/ou stockage de signaux à haute définition préalablement transmis selon le standard HDMAC, caractérisé en ce qu'il comprend :

    (1) un premier circuit de sélection entre ses deux entrées A et B, ladite entrée A recevant parmi lesdits signaux transmis ceux qui correspondent à des blocs d'image 80 millisecondes ;

    (2) en sortie de ce circuit et en série, deux mémoires de trame, la première étant en sortie de la seconde et la seconde en sortie dudit circuit ;

    (3) en sortie de la première mémoire de trame, un deuxième circuit de sélection entre ses deux entrées C et D, l'entrée C recevant ladite sortie de la première mémoire de trame et l'entrée D recevant les mêmes signaux que l'entrée A du premier circuit de sélection, et la sortie S de ce deuxième circuit de sélection formant d'une part la sortie du dispositif de prétraitement et étant d'autre part renvoyée, par l'intermédiaire d'une connexion de retour, vers l'entrée B du premier circuit de sélection.

2. Dispositif selon la revendication 1, caractérisé en ce que ladite sélection entre l'entrée A ou l'entrée B est opérée régulièrement à une cadence de deux périodes de trame desdits signaux à haute définition, et en ce que ladite sélection entre l'entrée C ou l'entrée D est régulièrement opérée, pendant toute la durée de sélection de l'entrée A, à une cadence correspondant à la fréquence des échantillons qui se présentent, avec immobilisation sur l'entrée C pendant toute la durée de sélection de l'entrée B.

6

FIG.1

FIG. 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 313 026 (SANYO)<br>* colonne 12, ligne 52 - colonne 13, ligne 52; figure 7 *<br>--- | 1,2 | H04N7/00 |
| A | US-A-5 027 204 (RIEGEL)<br>* colonne 2, ligne 1 - ligne 37; figure 1 *<br>--- | 1 | |
| A | ELECTRONIQUE INDUSTRIELLE<br>no. 134, 15 Novembre 1987, PARIS, FR<br>pages 83 - 89<br>PARET 'Amélioration de la qualité visuelle d'une image par conversion de balayage'<br>--- | | |
| A | PROCEEDINGS OF THE THIRD INTERNATIONAL WORKSHOP ON HDTV, SIGNAL PROCESSING OF HDTV, II, TURIN, IT, 30 AOUT - 1 SEPTEMBRE 1989<br>pages 261 - 271<br>BERNARD ET AL. 'HDMAC Coding Scheme and Compatibility'<br><br>----- | | **DOMAINES TECHNIQUES RECHERCHES (Int. Cl.5)**<br><br>H04N |

Le présent rapport a été établi pour toutes les revendications

| Lieu de la recherche | Date d'achèvement de la recherche | Examinateur |
|---|---|---|
| LA HAYE | 17 DECEMBRE 1992 | BERWITZ P. |